# EUROPEAN PATENT APPLICATION

(11) **EP 4 807 547 A1**
(43) Date of publication of application: **16.09.2026**
(21) Application number: 24916013.6
(22) Date of filing: 10.01.2024
(51) Int. Cl.: G06F 9/48

(54) **TASK SCHEDULING METHOD AND APPARATUS RELATED THERETO**

(71) Applicant: Honor Device Co., Ltd., Shenzhen, Guangdong 518040 (CN)
(72) Inventor: GUO, Daoxin, Shenzhen, Guangdong 518040 (CN); HUANG, Tonghuan, Shenzhen, Guangdong 518040 (CN); JIN, Fan, Shenzhen, Guangdong 518040 (CN)
(74) Representative: MERH-IP Matias Erny Reichl Hoffmann Patentanwälte PartG mbB
(86) International application number: PCT/CN2024/071699
(87) International publication number: WO 2025/147936

(57) **Abstract**

Embodiments of this application provide a task scheduling method and a related apparatus for same. An apparatus for implementing the task scheduling method may be an electronic device including a GPU and a display screen, such as a mobile phone or a tablet computer. Through implementation of the foregoing method, the electronic device can identify a task type of a GPU task, an application to which the GPU task belongs, and a current system scene, and flexibly adjust, from a system level, a GPU processing priority of each GPU task based on a type of the GPU task, a scene in which the GPU task is located, or the like, instead of determining the GPU processing priority of each GPU task based only on a GPU processing priority preset by an application program, to avoid frame freezing problems such as frame freezing of home screen display, thereby improving user experience.

## Description

### TECHNICAL FIELD

This application relates to the field of terminals, and in particular, to a task scheduling method and a related apparatus for same.

### BACKGROUND

Currently, application developers may set GPU processing priorities for applications by themselves. In this case, GPU processing priorities of some non-home-screen applications are equal to or even higher than a GPU processing priority of a home screen application. Consequently, a GPU cannot respond to a task of the home screen application in time, affecting smoothness of home screen display and affecting user experience.

### SUMMARY

This application provides a task scheduling method and a related apparatus for same.

According to a first aspect, this application provides a task scheduling method, applied to an electronic device. The method includes: receiving a first operation of a user; starting a first application in response to the first operation; performing, during running of the first application, a first GPU task created by the first application; receiving a second operation of the user; exiting from the first application to a home screen application in response to the second operation; and in a process of exiting from the first application to the home screen application, suspending the first GPU task and performing a second GPU task created by the home screen application.

An application program installed on an electronic device (such as a mobile phone or a tablet computer) other than a home screen application may be referred to as a non-home-screen application. An application program among non-home-screen applications may be referred to as a first application, for example, a video editing application, a video playing application, an instant messaging application, or a game application. Through implementation of the method according to the first aspect, in the process of exiting from the first application to the home screen, the electronic device can suspend the GPU task (that is, the first GPU task) of the first application, and preferentially perform the GPU task (that is, the second GPU task) created by the home screen application, to reduce a response time of the GPU task of the home screen application, and avoid frame freezing of home screen display.

In some embodiments, the second GPU task is a rendering task.

GPU tasks include a rendering task, a compositing task, and an image processing task. Blocking of the rendering task or the compositing task directly causes frame freezing of screen display. The electronic device may suspend the GPU task of the first application, and instead, perform the rendering task of the home screen application. This not only effectively avoids a problem of frame freezing of the home screen display, but also restricts the home screen application from preempting GPU resources, thereby reducing impact of preemption on other applications.

In some embodiments, a priority of the first GPU task is a second priority. The suspending the first GPU task and performing a second GPU task created by the home screen application includes: updating a priority of the second GPU task to a first priority, where the first priority is higher than the second priority; and suspending the first GPU task and performing the second GPU task based on the priorities of the second GPU task and the first GPU task.

Before the updating, the priority of the second GPU task is a third priority, and the third priority is equal to or lower than the second priority.

The electronic device may switch performing of GPU tasks of different applications through GPU processing priorities. When a GPU processing priority of the home screen application is not higher than that of the first application, the electronic device may increase the GPU processing priority of the home screen application, so that the GPU task of the first application is suspended and the GPU task of the home screen application is preferentially performed, thereby avoiding frame freezing of home screen display.

In some embodiments, the electronic device is provided with a first queue and a second queue, the first queue corresponds to a first priority, and the second queue corresponds to a second priority. The updating a priority of the second GPU task created by the home screen application to a first priority includes: adding the second GPU task created by the home screen application to the first queue.

The electronic device may directly add the GPU task of the home screen application to a high-priority queue, to increase the GPU processing priority of the home screen application, so that the GPU task of the home screen application is preferentially processed. The electronic device does not need to reset the GPU processing priority of the home screen application. In this way, after the process of exiting from the first application to the home screen application ends, that is, after returning to the home screen application, the electronic device also does not need to reset the GPU processing priority of the home screen application to restore the GPU processing priority of the home screen application to an initial setting.

In some embodiments, the first priority is adjacent to the second priority.

Preferably, during increase of the GPU processing priority of the home screen application, the electronic device may increase the priority of the home screen application by only one level. In another embodiment, the electronic device may directly increase the priority of the home screen application to a highest priority.

In some embodiments, after the performing a second GPU task created by the home screen application, the method further includes: resuming the first GPU task.

In some embodiments, after performing the second GPU task created by the home screen application, that is, after successfully exiting the first application and returning to the home screen application, the electronic device may no longer performing the remaining first GPU task of the first application, to reduce power consumption.

In some embodiments, the first application is a video editing application.

In some embodiments, the first GPU task is an image processing task.

In this way, the suspension of the first GPU task does not affect user experience.

According to a second aspect, this application provides a task scheduling method, applied to an electronic device. The method includes: running a home screen application; performing, during the running of the home screen application, a first GPU task created by a first application; receiving a third operation of a user; exiting the home screen application and running a second application in response to the third operation; and in a process of exiting the home screen application and running the second application, suspending the first GPU task and performing a second GPU task created by the home screen application, where the second application is the same as or different from the first application.

Through implementation of the method according to the second aspect, when the home screen application is run, the electronic device may process the GPU task of the first application. An application program among non-home-screen applications that is the same as or different from the first application may be referred to as a second application. When entering the second application from the home screen application, the electronic device may suspend the first GPU task, and preferentially perform the second GPU task created by the home screen application, to reduce a response time of the GPU task of the home screen application, and avoid frame freezing of home screen display.

In some embodiments, the second GPU task is a rendering task.

In some embodiments, a priority of the first GPU task is a second priority. The suspending the first GPU task and performing a second GPU task created by the home screen application includes: updating a priority of the second GPU task to a first priority, where the first priority is higher than the second priority; and suspending the first GPU task and performing the second GPU task based on the priorities of the second GPU task and the first GPU task.

Before the updating, the priority of the second GPU task is a third priority, and the third priority is equal to or lower than the second priority.

In some embodiments, the electronic device is provided with a first queue and a second queue, the first queue corresponds to a first priority, and the second queue corresponds to a second priority. The updating a priority of the second GPU task created by the home screen application to a first priority includes: adding the second GPU task created by the home screen application to the first queue.

In some embodiments, the first priority is adjacent to the second priority.

In some embodiments, after the performing a second GPU task created by the home screen application, the method further includes: resuming the first GPU task.

In some embodiments, the first application is a video editing application.

In some embodiments, the first GPU task is an image processing task.

It may be understood that some embodiments in the second aspect correspond to some embodiments in the first aspect. Therefore, for beneficial effects that can be achieved by the some embodiments in the second aspect, refer to beneficial effects of the corresponding embodiments in the first aspect. Details are not described herein again.

According to a third aspect, this application provides a task scheduling method, applied to an electronic device. The method includes: displaying a first home screen; performing, during the display of the first home screen, a first GPU task created by a first application; receiving a fourth operation of a user; exiting the first home screen and displaying a second home screen in response to the fourth operation; and in a process of exiting the first home screen and displaying the second home screen, suspending the first GPU task and performing a second GPU task created by a home screen application, where the first application is different from the home screen application.

Through implementation of the method according to the third aspect, when the home screen application is run, the electronic device may process the GPU task of the first application. In a home screen switching process, the electronic device may suspend the first GPU task, and preferentially perform the second GPU task created by the home screen application, to reduce a response time of the GPU task of the home screen application, and avoid frame freezing of the home screen display.

In some embodiments, the second GPU task is a rendering task.

In some embodiments, a priority of the first GPU task is a second priority. The suspending the first GPU task and performing a second GPU task created by the home screen application includes: updating a priority of the second GPU task to a first priority, where the first priority is higher than the second priority; and suspending the first GPU task and performing the second GPU task based on the priorities of the second GPU task and the first GPU task.

Before the updating, the priority of the second GPU task is a third priority, and the third priority is equal to or lower than the second priority.

In some embodiments, the electronic device is provided with a first queue and a second queue, the first queue corresponds to a first priority, and the second queue corresponds to a second priority. The updating a priority of the second GPU task created by the home screen application to a first priority includes: adding the second GPU task created by the home screen application to the first queue.

In some embodiments, the first priority is adjacent to the second priority.

In some embodiments, after the performing a second GPU task created by the home screen application, the method further includes: resuming the first GPU task.

In some embodiments, the first application is a video editing application.

In some embodiments, the first GPU task is an image processing task.

It may be understood that some embodiments in the third aspect correspond to some embodiments in the first aspect. Therefore, for beneficial effects that can be achieved by the some embodiments in the third aspect, refer to beneficial effects of the corresponding embodiments in the first aspect. Details are not described herein again.

According to a fourth aspect, this application provides a task scheduling method, applied to an electronic device. The method includes: displaying a third application in a first region of a screen of the electronic device, and displaying a fourth application in a second region of the screen, where the fourth application is different from the third application; and in a process of displaying the third application in the first region and displaying the fourth application in the second region: at a first moment, performing a third GPU task created by the third application; and at a second moment, suspending the third GPU task and performing a fourth GPU task created by the fourth application, where the second moment is after the first moment.

Through implementation of the method according to the fourth aspect, in a split-screen scene, the electronic device may suspend a GPU task of an application (for example, the third GPU task of the third application), and preferentially perform a GPU task of another application (for example, the fourth GPU task of the fourth application).

In some embodiments, the third application is a home screen application. In this case, the fourth application may be any non-home-screen application other than the home screen application.

In some embodiments, the fourth application is a video playing application or a game application. In this case, the third application may be a home screen application, or may be a non-home-screen application other than a video playing application or a game application.

In some embodiments, before the second moment, the method further includes: receiving a fifth operation performed on the second region, and after the fifth operation, before the second moment, there is no other touch operation performed on the second region. That is, in some embodiments, the fourth application may alternatively be an application program targeted by a latest user operation, that is, a focused application. In this case, the third application may be a home screen application, or may be a non-home-screen application other than a video playing application or a game application.

In this way, the electronic device may preferentially process a GPU task of a hard real-time application or a focused application such as a video playing application or a game application, to avoid the foregoing problem of display frame freezing that occurs in an application that the user is more concerned about, thereby avoiding affecting user experience.

In some embodiments, the fourth GPU task is a rendering task.

In some embodiments, a priority of the third GPU task is a second priority, and the suspending the third GPU task and performing a fourth GPU task created by the fourth application includes: updating a priority of the fourth GPU task to a first priority, where the first priority is higher than the second priority; and suspending the third GPU task and performing the fourth GPU task based on the priorities of the fourth GPU task and the third GPU task.

Before the updating, the priority of the fourth GPU task is a third priority, and the third priority is equal to or lower than the second priority.

In some embodiments, the electronic device is provided with a first queue and a second queue, the first queue corresponds to a first priority, and the second queue corresponds to a second priority. The updating a priority of the fourth GPU task created by the home screen application to a first priority includes: adding the fourth GPU task created by the home screen application to the first queue.

In some embodiments, the first priority is adjacent to the second priority.

In some embodiments, after the performing a fourth GPU task created by the home screen application, the method further includes: resuming the third GPU task.

It may be understood that some embodiments in the fourth aspect correspond to some embodiments in the first aspect. Therefore, for beneficial effects that can be achieved by the some embodiments in the fourth aspect, refer to beneficial effects of the corresponding embodiments in the first aspect. Details are not described herein again.

According to a fifth aspect, this application provides a task scheduling method, applied to an electronic device. The method includes: receiving a first GPU task; obtaining a system scene when the first GPU task is a rendering task; and increasing a GPU processing priority of the first GPU task when the system scene is a home screen animation scene and the first GPU task is created by a home screen application. The home screen animation scene includes one or more of the following: exiting from a first application to the home screen application, entering the first application from the home screen application, or updating content of the home screen application. The first application is an application program installed on the electronic device.

Through implementation of the method according to the fifth aspect, the electronic device may improve a GPU processing priority of a GPU task of a home screen application in a home screen animation scene, reduce a response time of the GPU task of the home screen application, and avoid frame freezing of home screen display.

In some embodiments, the method further includes: increasing the GPU processing priority of the first GPU task when the system scene is a home screen and application split-screen scene and the first GPU task is created by a non-home-screen application in the home screen and application split-screen scene.

Through implementation of the foregoing method, in the home screen and application split-screen scene, the electronic device can suspend the GPU task of the home screen application, and preferentially perform a GPU task of another non-home-screen application in the home screen and application split-screen scene, to avoid a problem of display frame freezing that occurs in a non-home-screen application that a user is more concerned about, thereby avoiding affecting user experience.

In some embodiments, the method further includes: increasing the GPU processing priority of the first GPU task when the system scene is a multi-application split-screen scene and the first GPU task is created by a hard real-time application or a focused application in the multi-application split-screen scene. The focused application is an application targeted by a latest user operation.

Through implementation of the foregoing method, in a multi-application split-screen scene, the electronic device may preferentially process a GPU task of a hard real-time application or a focused application such as a video playing application or a game application, to avoid the foregoing problem of display frame freezing that occurs in an application that the user is more concerned about, thereby avoiding affecting user experience.

In some embodiments, the method further includes: reducing the GPU processing priority of the first GPU task when the first GPU task is an image processing task.

Through implementation of the foregoing method, the electronic device may further lower a priority of an image processing task, thereby indirectly increasing a priority of a rendering task or a compositing task, and avoiding frame freezing of screen display.

In some embodiments, the method further includes: reducing the GPU processing priority of the first GPU task when the first GPU task is an image processing task and a second application creating the first GPU task is on a whitelist for which priority reduction is allowed.

Through implementation of the foregoing method, the electronic device can restrict, by using a whitelist for which priority reduction is allowed, a range of a GPU task whose GPU processing priority is reduced, thereby avoiding excessive consumption of GPU resources and impact on normal working of other applications.

In some embodiments, the updating content of the home screen includes: home screen content updating involving home screen switching based on a user sliding operation, and home screen content updating triggered by a component within the home screen by updating display content based on a preset rule.

The home screen animation scene further includes: home screen content updating involving home screen switching based on a user sliding operation, and home screen content updating triggered by a component within the home screen by updating display content based on a preset rule. In this way, when the user slides for home screen switching, or content of some elements within the home screen is updated, the electronic device can also increase the GPU processing priority of the GPU task of the home screen application, thereby avoiding frame freezing of home screen display.

According to a sixth aspect, this application provides an electronic device, including one or more processors and one or more memories. The one or more memories are coupled to the one or more processors. The one or more memories are configured to store a computer program. When the one or more processors execute the computer program, the electronic device is enabled to perform the method according to any one of the first aspect or possible implementations of the first aspect, or the electronic device is enabled to perform the method according to any one of the second aspect or possible implementations of the second aspect, or the electronic device is enabled to perform the method according to any one of the fourth aspect or possible implementations of the fourth aspect, or the electronic device is enabled to perform the method according to any one of the fifth aspect or possible implementations of the fifth aspect.

According to a seventh aspect, this application provides a chip system. The chip system is applied to an electronic device and includes one or more processors. The processor is configured to invoke computer instructions to enable the electronic device to perform the method according to any one of the first aspect or possible implementations of the first aspect, or enable the electronic device to perform the method according to any one of the second aspect or possible implementations of the second aspect, or enable the electronic device to perform the method according to any one of the fourth aspect or possible implementations of the fourth aspect, or enable the electronic device to perform the method according to any one of the fifth aspect or possible implementations of the fifth aspect.

According to an eighth aspect, this application provides a computer-readable storage medium, including a computer program. When the computer program is run on an electronic device, the electronic device is enabled to perform the method according to any one of the first aspect or possible implementations of the first aspect, or the electronic device is enabled to perform the method according to any one of the second aspect or possible implementations of the second aspect, or the electronic device is enabled to perform the method according to any one of the fourth aspect or possible implementations of the fourth aspect, or the electronic device is enabled to perform the method according to any one of the fifth aspect or possible implementations of the fifth aspect.

According to a ninth aspect, this application provides a computer program product including instructions. When the computer program product is run on an electronic device, the electronic device is enabled to perform the method according to any one of the first aspect or possible implementations of the first aspect, or the electronic device is enabled to perform the method according to any one of the second aspect or possible implementations of the second aspect, or the electronic device is enabled to perform the method according to any one of the fourth aspect or possible implementations of the fourth aspect, or the electronic device is enabled to perform the method according to any one of the fifth aspect or possible implementations of the fifth aspect.

It may be understood that, the electronic device according to the sixth aspect, the chip system according to the seventh aspect, the computer storage medium according to the eighth aspect, and the computer program product according to the ninth aspect are all configured to perform the method provided in this application. Therefore, for beneficial effects that can be achieved, refer to beneficial effects in the corresponding method. Details are not described herein again.

### BRIEF DESCRIPTION OF DRAWINGS

FIG. 1 is an architectural diagram of a system of an electronic device 100 according to an embodiment of this application;
FIG. 2 is a schematic diagram of a GPU task scheduling according to an embodiment of this application;
FIG. 3A to FIG. 3C are a group of user interfaces for exiting from a non-home-screen application to a home screen according to an embodiment of this application;
FIG. 4 is a flowchart of a task scheduling method according to an embodiment of this application;
FIG. 5A to FIG. 5E are schematic diagrams of a user interface for returning to a home screen according to an embodiment of this application;
FIG. 6A to FIG. 6E are schematic diagrams of a user interface for starting an application according to an embodiment of this application;
FIG. 7A to FIG. 7E are schematic diagrams of a user interface for switching a home screen according to an embodiment of this application;
FIG. 8 is a schematic diagram of a split screen according to an embodiment of this application;
FIG. 9 is a schematic diagram of another split screen according to an embodiment of this application;
FIG. 10 is a schematic diagram of a GPU task scheduling according to an embodiment of this application;
FIG. 11 is a schematic diagram of another GPU task scheduling according to an embodiment of this application;
FIG. 12 is a flowchart according to an embodiment of this application; and
FIG. 13 is a schematic structural diagram of an electronic device 100 according to an embodiment of this application.

### DESCRIPTION OF EMBODIMENTS

An electronic device 100 is provided with a graphics processing unit (graphics processing unit, GPU). The GPU may provide the electronic device 100 with a graphics computing capability, such as rendering or compositing.

The GPU is provided with a plurality of task queues. One task queue corresponds to one GPU processing priority. After receiving a plurality of tasks, the GPU preferentially processes a task in a high-priority queue. When a relatively large quantity of tasks in a task queue wait to be processed, a task at an end of the task queue and a task in a low-priority queue easily wait for a timeout, causing frame freezing of a corresponding application program (an application for short below).

A home screen application is installed on the electronic device 100. In addition to the home screen application, a plurality of other application programs are also installed on the electronic device 100. An application program other than the home screen application may be referred to as a non-home-screen application. The non-home-screen application may be provided by a manufacturer of the electronic device 100, or may be provided by another software developer, for example, a video playing application, a video editing application, or a game application downloaded from AppGallery.

Currently, application developers may set GPU processing priorities for applications by themselves. In an Android system architecture, GPU processing priorities include 1 (also referred to as REAL TIME), 4 (also referred to as HIGH), 8 (also referred to as MEDIUM), and 12 (also referred to as LOW). The priority 1 is the highest, and the priority 12 is the lowest. Exemplarily, a developer of a video playing application X (a non-home-screen application) may set a GPU processing priority of X to 8.

In this case, GPU processing priorities of some non-home-screen applications are equal to or even higher than a GPU processing priority of a home screen application (for example, the priority of the video playing application X is 8, and the priority of the home screen application is also 8; or the priority of the video playing application X is 4, and the priority of the home screen application is 8). Consequently, the GPU cannot respond to a task of the home screen application in time, affecting smoothness of home screen display and affecting user experience.

In view of this, an embodiment of this application provides a task scheduling method. The method may be applied to an electronic device 100 including a GPU.

Through implementation of the method, the electronic device 100 can identify a task type of a GPU task, an application to which the GPU task belongs, and a current system scene. When a task type of a GPU task is rendering, an application to which the GPU task belongs is a home screen application, and the GPU task is in a home screen animation scene, the electronic device 100 may increase a GPU processing priority of the GPU task. When a task type of a GPU task is rendering, and an application to which the GPU task belongs is a non-home-screen application in a home screen and application split-screen scene, the electronic device 100 may increase a GPU processing priority of the GPU task. When a task type of a GPU task is rendering, and an application to which the GPU task belongs is a hard real-time application or a focused application in a multi-application split-screen scene, the electronic device 100 may increase a GPU processing priority of the GPU task.

In this way, the electronic device 100 can flexibly adjust, from a system level, a GPU processing priority of each GPU task based on a type of the GPU task, a scene in which the GPU task is located, or the like, instead of determining the GPU processing priority of each GPU task based only on a GPU processing priority preset by an application program, to avoid frame freezing problems such as frame freezing of home screen display, thereby improving user experience.

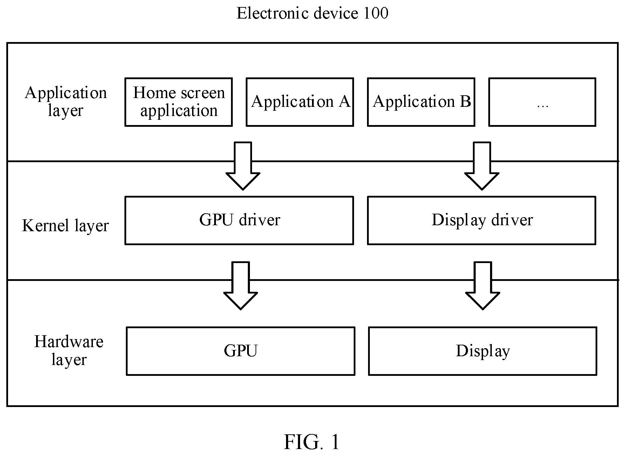

FIG. 1 is an architectural diagram of a system of an electronic device 100 according to an embodiment of this application.

A layered architecture may be used for a software system of the electronic device 100. In this embodiment of this application, preferably, an android system architecture in a layered architecture may be specifically used for the electronic device 100.

In the layered architecture, software is divided into several layers. The layers communicate through a software interface. The Android system includes four layers, from top to bottom: an application program layer (application layer for short), an application program framework layer (framework layer for short), a system library, and a kernel layer. FIG. 1 shows only the application layer and the kernel layer.

The application layer includes a plurality of applications. As shown in FIG. 1, the application layer may include a home screen application and a non-home-screen application: an application A, an application B, or the like. A specific type of the non-home-screen application is not limited in this embodiment of this application. The non-home-screen application may be a video playing application, a video editing application, an instant messaging application, a game application, or the like.

The kernel layer is a layer between hardware and software. As shown in FIG. 1, the kernel layer includes at least a GPU driver and a display screen driver. The GPU driver may be configured to control a GPU to process image data. The image data processed by the GPU may be sent to a display screen. The display screen driver may be configured to control the display screen to display the foregoing image data.

Any application in the application layer may deliver a task to the GPU through the GPU driver. The electronic device 100 may run a plurality of applications at the same time. In this case, the GPU driver may receive a plurality of tasks delivered by the plurality of applications. The GPU driver may sort the foregoing plurality of tasks based on time points at which the tasks arrive and GPU processing priorities of applications to which the tasks belong. The GPU responds to the tasks in sequence based on the foregoing sorting.

Exemplarily, the GPU driver may be provided with four priorities, denoted as S1, S2, S3, and S4, respectively. S1 (the highest priority) > S2 > S3 > S4 (the lowest priority). S1, S2, S3, and S4 are in a one-to-one correspondence with the foregoing exemplified priorities 1, 4, 8, and 12. Correspondingly, the GPU driver is provided with four task queues, denoted as Q1, Q2, Q3, and Q4, respectively. Q1 corresponds to S1 and is used for caching a task whose priority is S1. Q2 corresponds to S2 and is used for caching a task whose priority is S2. Q3 corresponds to S3 and is used for caching a task whose priority is S3. Q4 corresponds to S4 and is used for caching a task whose priority is S4. In an embodiment, a GPU processing priority of the home screen application may be set to S3, and a GPU processing priority of the application A may also be set to S3. In this case, the GPU processing priority of the non-home-screen application, namely, the application A, is the same as that of the home screen application.

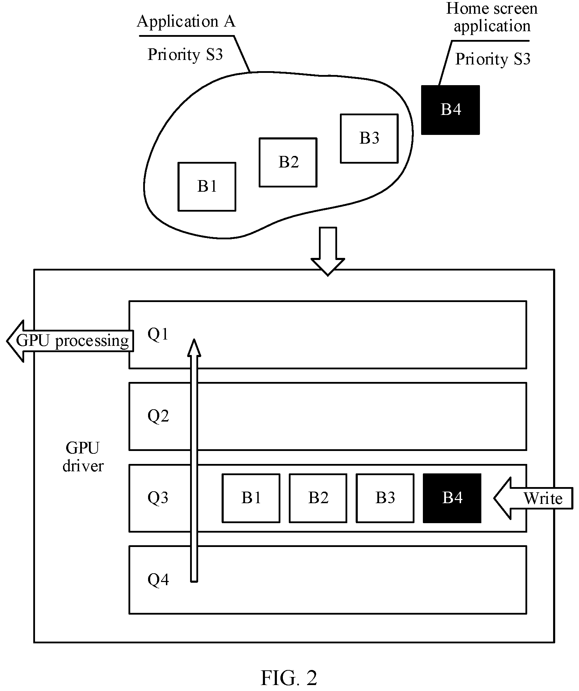

As shown in FIG. 2, the GPU driver may sequentially receive four tasks, B1, B2, B3, and B4, delivered by the application layer. B1, B2, and B3 are delivered by the application A. B4 is delivered by the home screen application. Based on the GPU processing priority S3 of the application A, the GPU driver may add B1 to the queue Q3 after receiving B1; add B2 to the queue Q3 after receiving B2; and add B3 to the queue Q3 after receiving B3. Based on the GPU processing priority S3 of the home screen application, the GPU driver may add B4 to the queue Q3 after receiving B4.

After task processing in a high-priority queue (for example, Q1 and Q2) is completed, the GPU may start to process a task in Q3. In this way, the GPU may process B1, B2, B3, and B4 in sequence.

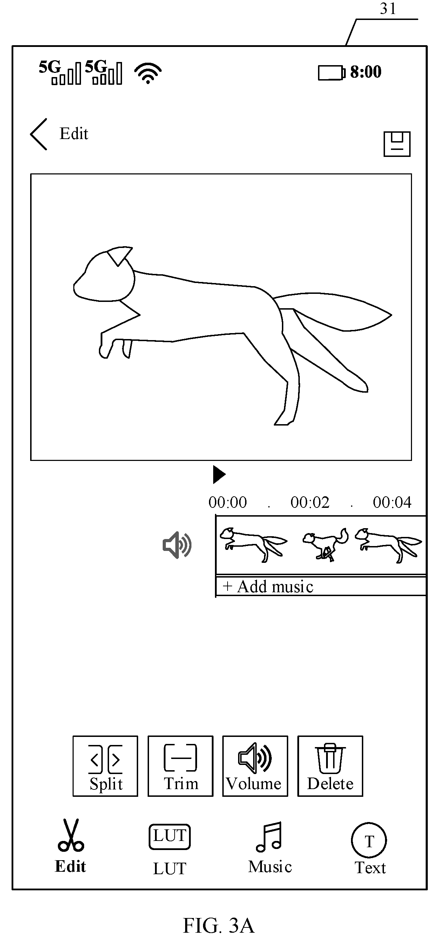

FIG. 3A to FIG. 3C are a group of user interfaces for exiting from an application A to a home screen according to an embodiment of this application.

Exemplarily, the application A may be a video editing application, for example, CapCut. FIG. 3A shows an editing interface 31 of a video editing application according to an embodiment of this application. A user may edit a video through the editing interface 31. In the foregoing process, the application A may deliver a GPU task to a GPU. There are at least three types GPU tasks: rendering, compositing, and image processing. The GPU task delivered by the application A to the GPU includes one or more of the foregoing types.

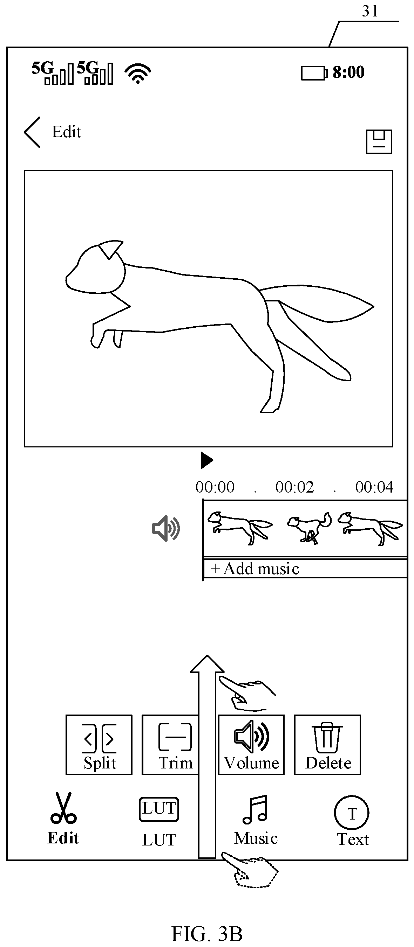

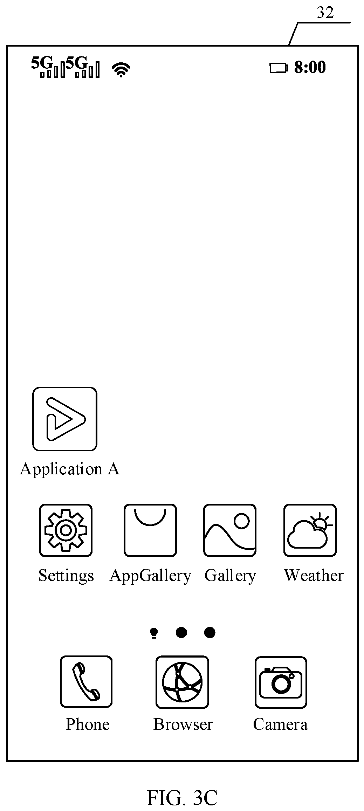

Referring to FIG. 3B, in a process of displaying the editing interface 31, an electronic device 100 may receive a touch operation of sliding upward from a lower edge of a screen, which is referred to as a slide-up operation for short. Referring to FIG. 3C, in response to the foregoing operation, the electronic device 100 may display a home screen 32 provided by a home screen application.

Preferably, in a process of switching from the editing interface 31 to the home screen 32, the application A may be switched to a background running mode. The home screen application may be switched to a foreground running mode.

After the application A is switched to the background running mode, the application A can still continue to deliver a task to the GPU. In this case, the GPU task delivered by the application A is mostly an image processing task, for example, a task of changing a video display effect by using a filter or a facial beautification algorithm.

In this case, as shown in FIG. 2, before the home screen application delivers a task to the GPU, the GPU further successively receives tasks delivered by the application A. Later, the GPU further receives a task delivered by the application A. In addition, because GPU processing priorities of the application A and the home screen application are the same, after first receiving a task delivered by the application A, the GPU responds to the task of the application A first. This causes an increase in a response time for the task of the home screen application, and further triggers frame freezing of home screen display, affecting user experience.

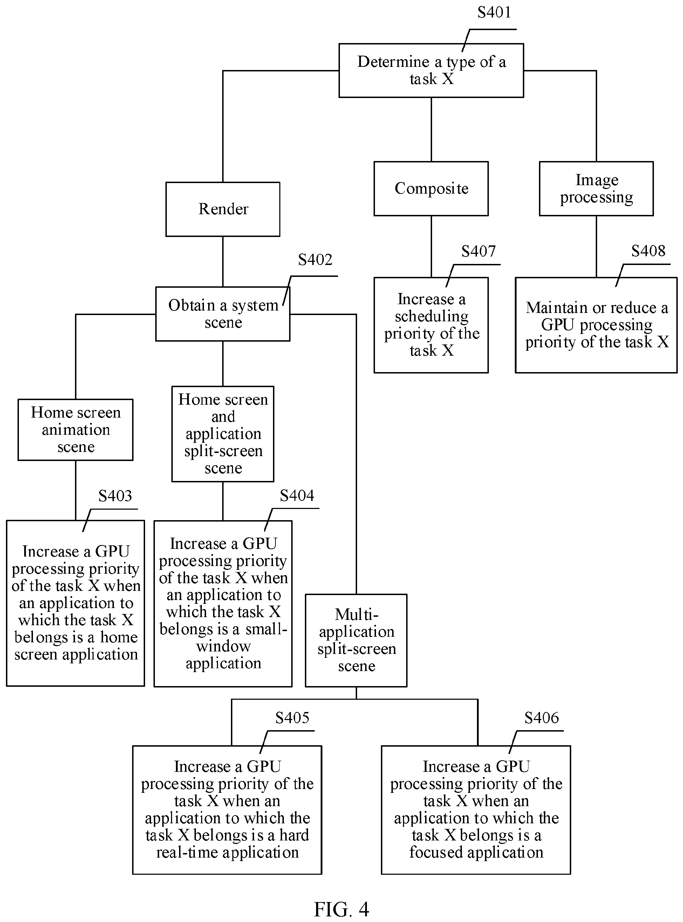

In view of this, an embodiment of this application provides a task scheduling method. FIG. 4 is a flowchart of a task scheduling method according to an embodiment of this application.

S401: Determine a type of a GPU task X.

At any moment, any application in an application layer may deliver a task to a CPU, denoted as a task X (a first GPU task). After receiving the task X, a GPU driver may determine a type of the task X: rendering, compositing, or image processing. The GPU driver may determine the type of the task X through a thread name of the task X.

S402: Obtain a current system scene when the task X is a rendering task.

A state in which an operating system runs may be referred to as a system scene. In this embodiment of this application, the system scene includes at least a home screen animation scene, a home screen and application split-screen scene, and a multi-application split-screen scene. The GPU driver may determine the current system scene based on a system identifier. The home screen animation scene, the home screen and application split-screen scene, and the multi-application split-screen scene are specifically described in subsequent embodiments, which are not elaborated herein.

S403: Increase a GPU processing priority of the task X when the task X is in a home screen animation scene and an application to which the task X belongs is a home screen application. The application to which the task X belongs is an application that delivers the task X. The GPU driver may determine, based on a process name of the task X, the application to which the task X belongs.

S404: Increase a GPU processing priority of the task X when the task X is in a home screen and application split-screen scene and an application to which the task X belongs is a non-home-screen application in the scene.

S405: Increase a GPU processing priority of the task X when the task X is in a multi-application split-screen scene and an application to which the task X belongs is a hard real-time application. An application occupying screen display in the multi-application split-screen scene may be referred to as a foreground application. An application of frequent rendering (a rendering frequency per unit time being higher than a preset value) in the foreground application may be referred to as a hard real-time application, for example, a game application or a video playing application.

S406: Increase a GPU processing priority of the task X when the task X is in a multi-application split-screen scene and an application to which the task X belongs is a focused application. An application on which a latest user touch operation (fifth operation) stays in a foreground application may be referred to as a focused application.

S407: Increase a GPU processing priority of the task X when the task X is a compositing task.

S408: Maintain or reduce a GPU processing priority of the task X when the task X is an image processing task.

In an embodiment, the GPU driver may directly set a priority of the task X to the highest priority, to increase a priority of the GPU processing priority of the task X. In another embodiment, the GPU driver may alternatively increase a priority of the task X by one level, to increase a priority of the GPU processing priority of the task X.

Preferably, during the increase of the GPU processing priority of the task X shown in S407, the GPU driver may directly set the priority of the task X to the highest priority, for example, S1. During the increase of the GPU processing priority of the task X shown in S403 to S406, the GPU driver may alternatively increase the priority of the task X by one level, for example, from S3 to S2.

In an embodiment, when the task X is an image processing task, the GPU driver maintains the GPU processing priority of the task X. A time consumed by a GPU for processing a task is referred to as a GPU response time. In another embodiment, the electronic device 100 may set an application whitelist to record an application whose maximum GPU response time is greater than a preset value, that is, an application that does not require a fast GPU response. When the task X is an image processing task, and the application to which the task X belongs is on the foregoing application whitelist, the GPU driver may reduce the GPU processing priority of the task X. On the contrary, the GPU driver may maintain the GPU processing priority of the task X unchanged.

Through implementation of the foregoing method, the electronic device 100 can selectively increase a GPU processing priority of a home screen rendering task. This not only effectively avoids a problem of frame freezing of home screen display, but also minimizes GPU resources occupied and avoids affecting normal working of another application, thereby improving user experience.

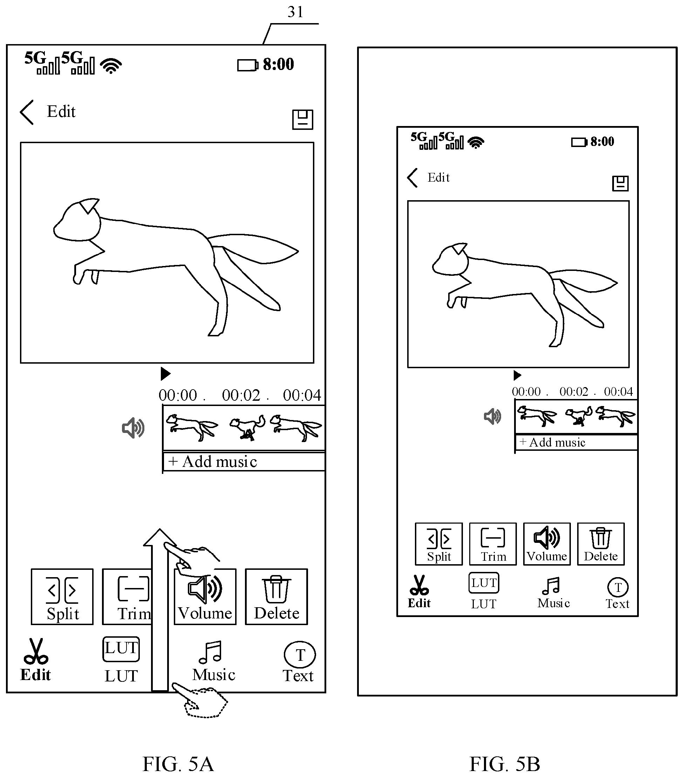

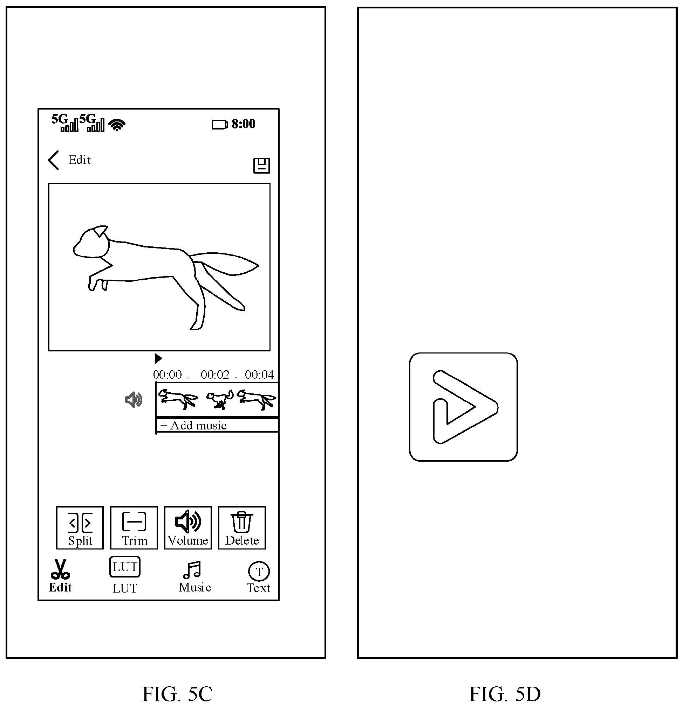

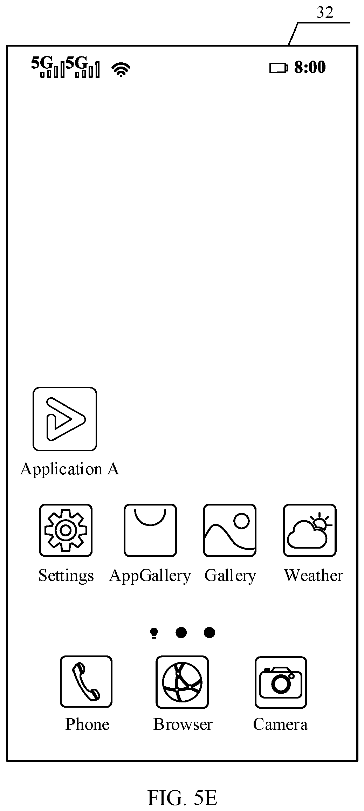

FIG. 5A to FIG. 5E are schematic diagrams of a user interface for returning to a home screen according to an embodiment of this application.

An electronic device 100 may receive a user operation (that is, a first operation) performed on a shortcut icon of an application A, and the electronic device 100 may start and run the application A (first application) in response to the foregoing operation. In a process of running the application A, the electronic device 100 may receive a preset specified operation. In response to the operation, the electronic device 100 may exit the application A that is currently occupying screen display to a home screen application, to display the home screen. Referring to FIG. 5A, the application A may be a video editing application. When running the video editing application, the electronic device 100 may occupy a screen to display an editing interface 31. In a process of displaying the editing interface 31, the electronic device 100 may receive a slide-up operation (second operation). In response to the foregoing slide-up operation, the electronic device 100 may exit the application A, switch to the home screen application, and display a home screen 32.

Before displaying the home screen, the electronic device 100 first displays a group of images for switching to the home screen. This group of images is also referred to as a home screen enter animation. Exemplarily, the electronic device 100 may sequentially display a group of images shown in FIG. 5B to FIG. 5D. The electronic device 100 may first capture the editing interface 31 to obtain a frame of screenshot, and then the electronic device 100 may gradually zoom out the screenshot. After zooming out the screenshot to a preset size, the electronic device 100 may switch to the shortcut icon of the application A, then gradually zoom out the shortcut icon of the application A, and finally display the home screen 32. A screen image sequence shown in FIG. 5B to FIG. 5D is a group of home screen enter animations.

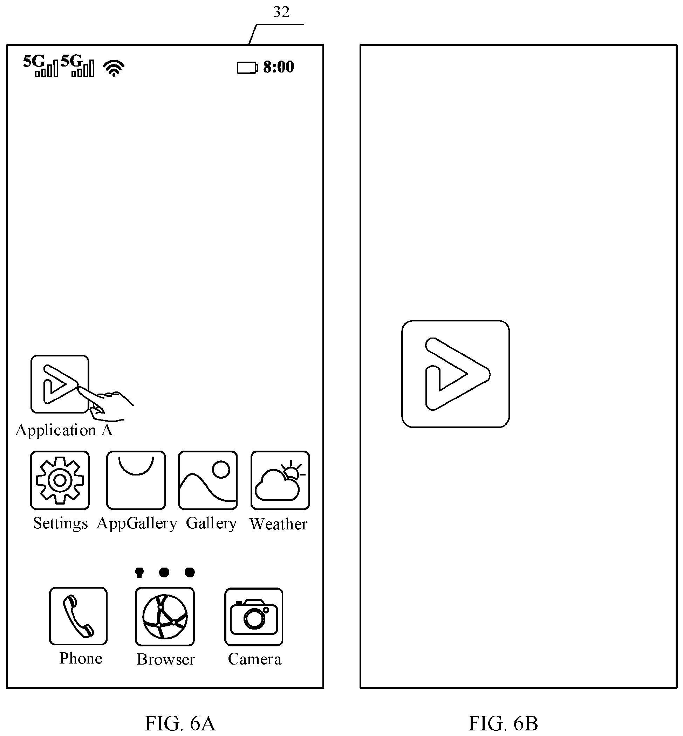

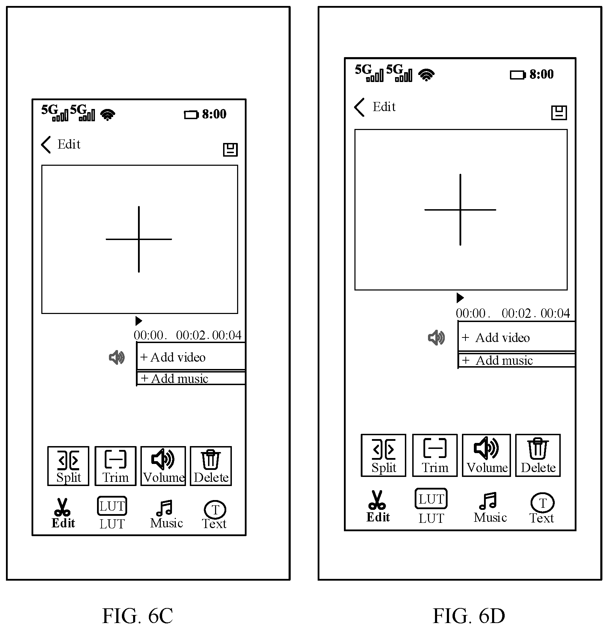

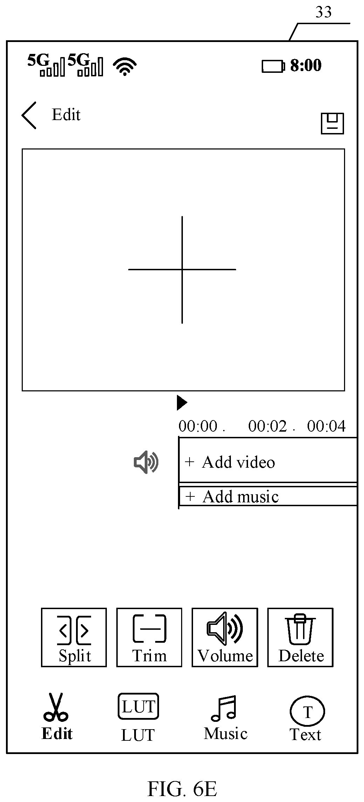

FIG. 6A to FIG. 6E are schematic diagrams of a user interface for starting an application according to an embodiment of this application.

In a process of displaying a home screen, an electronic device 100 may run an application A in the background, for example, a video editing application (first application). In the process of displaying the home screen, the electronic device 100 may receive a user operation on any application shortcut icon. In response to the foregoing operation, the electronic device 100 may start an application corresponding to the shortcut icon, and display a user interface provided by the application. Referring to a home screen 32 shown in FIG. 6A, the electronic device 100 may receive a user operation (third operation), for example, a tap operation, on a shortcut icon of an application A. In response to the foregoing operation, the electronic device 100 may exit a home screen application to run the application A (second application), and display a user interface of the application A, for example, an editing interface 33.

Before displaying the user interface provided by the application, the electronic device 100 may first display a group of images for entering the application. This group of images is also referred to as a home screen exit animation. Exemplarily, the electronic device 100 may sequentially display a group of images shown in FIG. 6B to FIG. 6D. The electronic device 100 may first zoom out the shortcut icon of the application A. After the icon is zoomed out to a preset size, the electronic device 100 may display an image (preferably, the image may be a screenshot of a main interface of the application A) corresponding to the application A, then gradually zoom out the image, and finally display the editing interface 33. A screen image sequence shown in FIG. 6B to FIG. 6D is a group of home screen exit animations.

In another scene, in the process of displaying the home screen, the electronic device 100 may run an application C in the background, for example, a drawing application (first application). In the process of displaying the home screen, a GPU may process a GPU task of the application C. After receiving the user operation (third operation) on the shortcut icon of the application A, the electronic device 100 may exit the home screen application to run the application A (second application). In this case, the first application running in the background before the third operation and the second application running after the third operation are not a same application. In other words, exiting the home screen application to run the second application may be updating an application that previously runs in the background to an application running in the foreground (occupying a screen), or may be starting and running a new application.

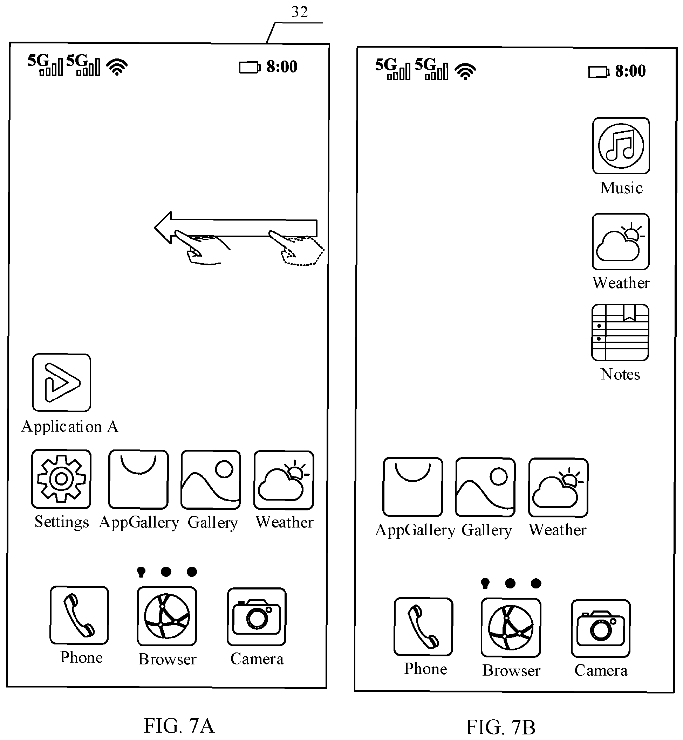

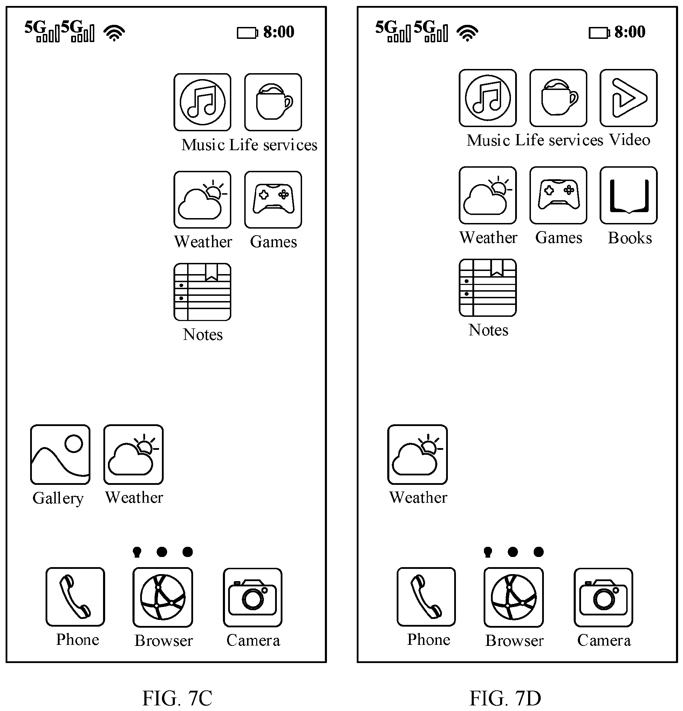

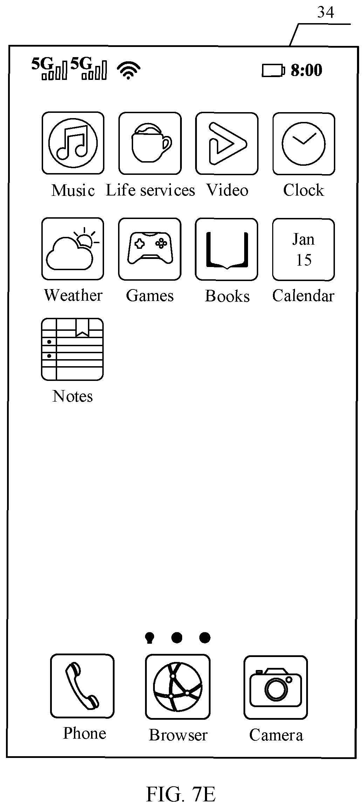

FIG. 7A to FIG. 7E are schematic diagrams of a user interface for switching a home screen according to an embodiment of this application.

In a process of displaying a home screen, an electronic device 100 may receive a slide-left/slide-right operation, and in response to the foregoing operation, the electronic device 100 may switch the home screen. The slide-left operation is a touch operation involving sliding from a right edge of a screen to the left. The slide-right operation is a touch operation involving sliding from a left edge of a screen to the right. The slide-left and slide-right operations are also referred to as switching operations. Referring to FIG. 7A, in a process of displaying a home screen 32 (first home screen), the electronic device 100 may receive a slide-left operation. In response to the foregoing operation, the electronic device 100 may switch from displaying the home screen 32 to displaying a home screen 34 (second home screen).

Before displaying the home screen 34, the electronic device 100 may first display a group of gradient images. This group of images is also referred to as a home screen switch animation. The home screen switch animation may be determined based on two home screens before and after a switching operation. Exemplarily, as shown, the electronic device 100 may sequentially display a group of gradient images shown in FIG. 7B to FIG. 7D. FIG. 7B to FIG. 7D are determined based on the home screen 32 before the switching operation and the home screen 34 after the switching operation. In FIG. 7B to FIG. 7D, a proportion of image content from the home screen 32 continuously decreases, while a proportion of image content from the home screen 34 continuously increases. A screen image sequence shown in FIG. 7B to FIG. 7D is a group of home screen switch animations.

When the electronic device 100 displays the home screen enter animations shown in FIG. 5B to FIG. 5D, the home screen exit animations shown in FIG. 6B to FIG. 6D, or the home screen switch animations shown in FIG. 7B to FIG. 7D, the GPU driver may determine that the GPU driver is currently in a home screen animation scene.

In some embodiments, the home screen 32 further includes a self-changing element, such as a weather card, a clock dial, or a gallery memory card. Using a weather card as an example, the weather card may update display content in the card based on a weather change, such as updating a sunny day icon to a rainstorm icon. In this case, in a process of maintaining display of the home screen 32, the home screen application also delivers a rendering task to the GPU to update the self-changing element in the home screen 32. In this case, update of the home screen 32 caused by update of the self-changing element may also be referred to as a home screen animation scene. The home screen animation scene is a scene in which home screen content changes.

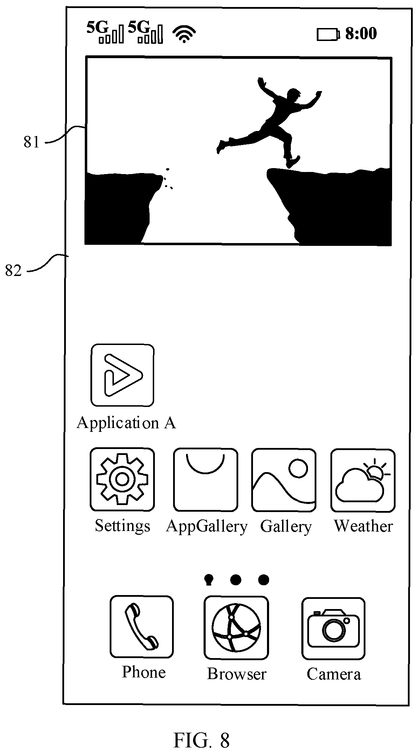

FIG. 8 is a schematic diagram of a split screen according to an embodiment of this application.

An electronic device 100 may create one or more windows. One application may occupy one window to display a user interface provided by the application. Usually, an area of the window is smaller than an area of the screen. Therefore, the window is also referred to as a small window. A screen display region outside the window may be referred to as a basic display region. The basic display region is also referred to as a large window, and may further be used by an application to display a user interface of the application.

As shown in FIG. 8, the electronic device 100 may create a window 81. An application A (fourth application) may use the window 81. Preferably, the application A is a video playing application. In this case, the application A may play a video by using the window 81. A screen display region outside the window 81 (second region) is denoted as a basic display region 82 (first region). As shown in FIG. 8, a home screen application (third application) may display, by using the basic display region 82, a home screen including shortcut icons of a plurality of applications. It may be understood that, compared with a home screen 32 occupying the entire screen display, in this case, the home screen displayed by the home screen application is incomplete.

A display scene including one or more windows may be referred to as a split-screen scene. The split-screen scene of the home screen and the application A shown in FIG. 8 is also referred to as a home screen and application split-screen scene. When the electronic device 100 performs a split-screen display operation shown in FIG. 8, a GPU driver may determine that the GPU driver is currently in a home screen and application split-screen scene.

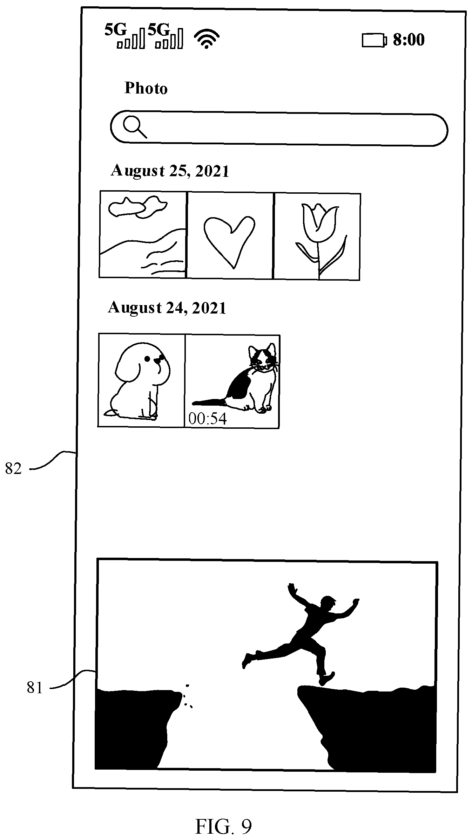

FIG. 9 is a schematic diagram of another split screen according to an embodiment of this application.

An application using a large window is also referred to as a large-window application. In a split-screen scene, the large-window application may also be a non-home-screen application. Referring to FIG. 9, a gallery application (third application and non-home-screen application) and an application A (fourth application, such as a video playing application) may be displayed in a split screen. Preferably, a large-window application using a basic display region is different from a small-window application using a window.

A split-screen scene of a plurality of non-home-screen applications is also referred to as a multi-application split-screen scene. When an electronic device 100 performs a split-screen display operation shown in FIG. 9, a GPU driver may determine that the GPU driver is currently in a multi-application split-screen scene.

In addition to the split screen in a form of a floating window shown in FIG. 8 and FIG. 9, the electronic device 100 may further support a tiled split screen. In a tiled split-screen scene, windows do not overlap. The electronic device 100 may support two or more windows. At most one of the foregoing two or more windows displays a home screen application, while the other windows display non-home-screen applications.

Through the scheduling method shown in FIG. 4, the GPU driver can rearrange received tasks of different applications based on preset GPU processing priorities to reorder a GPU processing sequence.

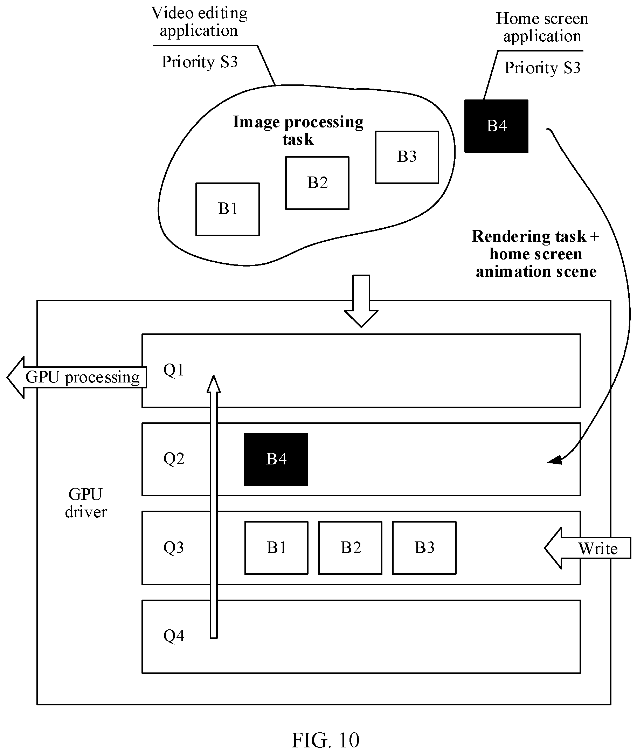

FIG. 10 is a schematic diagram of a GPU task scheduling according to an embodiment of this application.

In a scene of returning to a home screen shown in FIG. 5A to FIG. 5E, at least the home screen and a video editing application (first application) are running on an electronic device 100. When an editing interface 31 is displayed, the video editing application may successively deliver three tasks B1, B2, and B3 (first GPU tasks) to a GPU. B1, B2, and B3 are all image processing tasks. For example, a display effect of a video picture is changed by using a filter. According to the scheduling method shown in FIG. 4, the GPU driver may determine to maintain processing priorities of B1, B2, and B3. When a GPU processing priority of the video editing application is S3 (second priority), the GPU driver may determine that the processing priorities of B1, B2, and B3 are S3, and then sequentially add B1, B2, and B3 to a queue Q3 (second queue).

Then, the GPU driver may receive a task B4 (second GPU task). The GPU driver may determine, based on a thread name of B4, that B4 is a rendering task. Further, the GPU driver may obtain a current system scene. In this case, the GPU driver may determine that the GPU driver is currently in a home screen animation scene. Therefore, after determining, based on a process name of B4, that B4 belongs to a home screen application, the GPU driver may determine to increase a priority of B4. When a GPU processing priority of the home screen application is S3 (third priority), the GPU driver may increase the priority of B4 to S2 or S1 (first priority). Preferably, the GPU driver may increase the priority of B4 to S2 that is adjacent to S3, that is, increase the priority by one level. Therefore, the GPU driver may add B4 to a queue Q2 (first queue).

In this case, the GPU may preferentially process B4, and then process B1, B2, and B3.

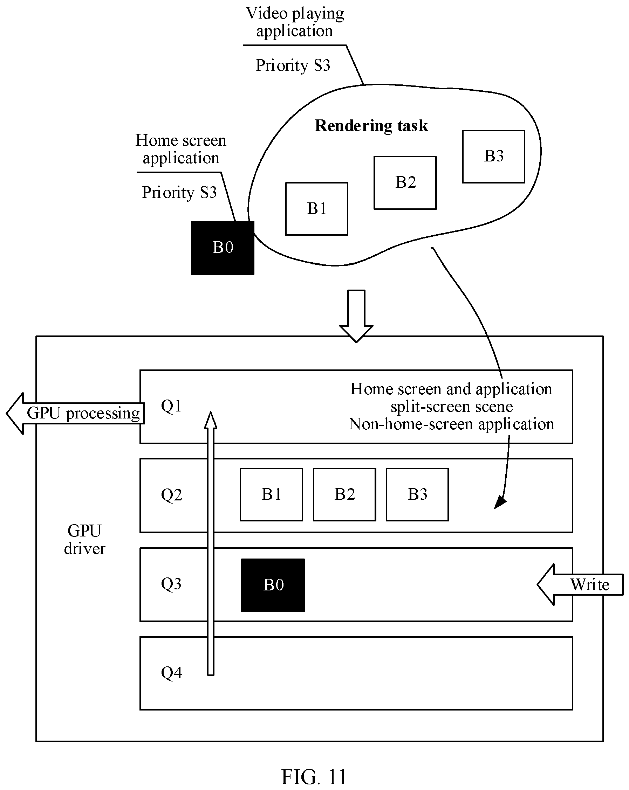

FIG. 11 is a schematic diagram of another GPU task scheduling according to an embodiment of this application.

In a home screen and application split-screen scene shown in FIG. 8, at least a home screen and a video playing application are running on the electronic device 100. As shown in FIG. 11, a GPU driver may receive a task B0 (third GPU task) delivered by a home screen application. Based on a priority of S3 (second priority), the GPU driver may add B0 to a queue Q3 (second queue).

Then, the GPU driver may receive three tasks B1, B2, and B3 (fourth GPU tasks) delivered by the video playing application. Using B1 as an example, the GPU driver may determine B1 as a rendering task. Further, the GPU driver may obtain a current system scene. In this case, the GPU driver may determine that the GPU driver is currently in a home screen and application split-screen scene. After determining that the video playing application to which B1 belongs is a non-home-screen application, the GPU driver may determine to increase a priority of B1. Similarly, the GPU driver may increase priorities of B2 and B3. When a GPU processing priority of the video playing application is S3 (third priority), as shown in FIG. 11, the GPU driver may increase the priorities B1, B2, and B3 to S2 (first priority). Therefore, the GPU driver may add B1, B2, and B3 to a queue Q2 (first queue).

In this case, a GPU preferentially processes B1, B2, and B3, and then processes B0.

In this way, the electronic device 100 can selectively increase a GPU processing priority of a home screen rendering task. This not only effectively avoids a problem of frame freezing of home screen display, but also minimizes GPU resources occupied and avoids affecting normal working of another application, thereby improving user experience.

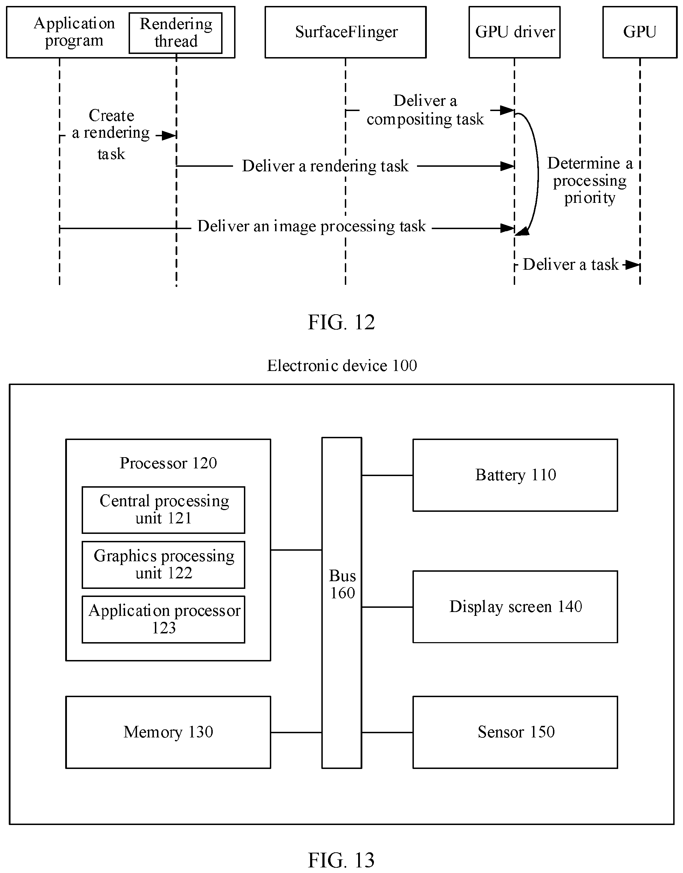

FIG. 12 is a flowchart according to an embodiment of this application.

An application program may be any application program installed on an electronic device 100, for example, a home screen, an application A, and an application B shown in FIG. 1. The application program includes a rendering thread that may be configured to create a thread. The thread created by the rendering thread includes a rendering thread.

An application program framework layer (framework layer for short) is further included between an application layer and a kernel layer. The framework layer provides an upper-layer application program with an application programming interface (application programming interface, API) and a programming framework. The application program framework layer includes some predefined functions. The framework layer includes a display compositing function SurfaceFlinger for compositing an image.

As shown in FIG. 12, an application program may create a rendering task through a rendering thread, and then deliver the rendering task to a GPU driver. When content needs to be displayed on a display screen, for example, when an interaction interface is displayed, the application program may send rendering content to the rendering thread, to create a rendering task.

The application program, for example, a video editing application, may alternatively deliver an image processing task to the GPU driver.

One frame of image displayed on the display screen may come from a plurality of application programs. SurfaceFlinger may composite rendered images from the plurality of application programs to obtain a frame of image, and then send the frame of image to the display screen for display. An image obtained by a GPU by performing a rendering task may be referred to as a rendered image. The application program may send the rendered image to SurfaceFlinger. SurfaceFlinger creates a compositing task based on the received rendered image, and then may deliver the compositing task to the GPU driver to complete compositing.

The GPU driver may determine GPU processing priorities of the tasks based on a sequence of receiving the tasks, a GPU priority of the application program, and a scheduling policy shown in FIG. 4, and then sequentially send the received tasks to the GPU based on the priorities. The GPU driver may translate a task instruction delivered by an upper layer into machine code recognized by the GPU, and then send the machine code to the GPU. The GPU performs computing based on the machine code to complete rendering, compositing, and image processing.

FIG. 13 is a schematic structural diagram of an electronic device 100 according to an embodiment of this application.

As shown in FIG. 13, the electronic device 100 may include a battery 110, a processor 120, a memory 130, a display screen 140, and a sensor 150. The battery 110, the processor 120, the memory 130, the display screen 140, and the sensor 150 are connected through the bus 160.

The battery 110 supplies power to the processor 120, the memory 130, the display screen 140, the sensor 150, and the like.

The processor 120 may include a plurality of processing units, for example, a central processing unit (central processing unit, CPU) 121, a graphics processing unit (graphics processing unit, GPU) 122, an application processor (application processor, AP) 123, a modem, an image signal processor (image signal processor, ISP), a controller, a video codec, a digital signal processor (digital signal processor, DSP), a baseband processor, and/or a neural-network processing unit (neural-network processing unit, NPU). The controller may generate an operation control signal based on instruction operation code and a time-sequence signal, and control obtaining and execution of instructions.

The processor 120 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface, and the like. The processor 120 may obtain data and a control signal through the foregoing interface.

The memory 130 is configured to store a computer program. The memory 130 may include one or more random access memories (random access memory, RAM) and one or more non-volatile memories (non-volatile memory, NVM). The random access memory may be directly read and written by the processor 120, may be configured to store executable programs (such as machine instructions) of an operating system or another running program, and may be further configured to store data of a user and an application. The non-volatile memory may also store the executable programs, the data of the user and the application, and the like. The executable programs and the data stored in the non-volatile memory may be loaded into the random access memory in advance for direct reading or writing by the processor 120.

A computer-executable program for implementing the task scheduling method described in this embodiment of this application may be stored in the memory 130. The processor 120 can read and execute the program from the memory 130, to implement a function of selectively increasing processing priorities of some GPU tasks of some applications, thereby avoiding frame freezing of a screen and improving user experience.

The electronic device 100 may further include an external memory interface, configured to be connected to an external non-volatile memory, to expand a storage capability of the electronic device 100.

The display screen 140 is configured to perform display. The display screen 140 includes a display panel. The display panel may be a liquid crystal display (liquid crystal display, LCD), an organic light-emitting diode (organic light-emitting diode, OLED), or the like. In some other embodiments, the electronic device 100 may include a plurality of display screens 140. In this case, the split screens shown in FIG. 8 and FIG. 9 may be split screens based on the plurality of display screens 140. One display screen 140 of the plurality of display screens 140 is used for one application. The electronic device 100 implements display functions shown in FIG. 5A to FIG. 5E, FIG. 6A to FIG. 6E, FIG. 7A to FIG. 7E, FIG. 8, and FIG. 9 by using the GPU, the display screen 140, the application processor, and the like.

In this embodiment of this application, the sensor 150 includes at least a touch sensor. The touch sensor is also referred to as a "touch device". The touch sensor may be arranged in the display 140. The touch sensor and the display 140 constitute a touchscreen, which is also referred to as a "touch screen". The touch sensor is configured to detect a touch operation performed on or near the touch sensor. The touch sensor may transfer the detected touch operation to the application processor to determine a touch event type. Then, the application processor may provide, through the display screen 140, a visual output related to the touch operation, to implement a user interaction control function, for example, a function of returning to a home screen triggered by a slide-up operation shown in FIG. 5A to FIG. 5E, a function of starting an application triggered by a click operation shown in FIG. 6A to FIG. 6E, and a function of switching a home screen triggered by a slide-left operation shown in FIG. 7A to FIG. 7E.

Not limited to the touch sensor shown in FIG. 13, the sensor 150 may further include more sensors, for example, a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, and a bone conduction sensor, which are not listed one by one herein.

Not limited to the components shown in FIG. 13, the electronic device 100 may further include more components, for example, an antenna, a mobile communication module, a wireless communication module, an audio module, a headset jack, a button, a motor, an indicator, a camera, and a subscriber identity module (subscriber identification module, SIM) card interface. The electronic device 100 may implement a photographing function through an ISP, a camera 193, the video codec, the GPU, the display screen 140, the application processor, and the like. The electronic device 100 may implement an audio function, for example, music playing or sound recording, through an audio module, a speaker, a receiver, a microphone, a headset jack, an application processor, and the like.

Preferably, in this embodiment of this application, the electronic device 100 is a mobile phone or a tablet computer.

Not limited to a mobile phone, the electronic device 100 may also be a home screen computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, or a smart home device and/or a smart city device. A specific type of the electronic device 100 is not specially limited in this embodiment of this application.

The foregoing descriptions are merely specific implementations of the present invention, but the protection scope of the present invention is not limited thereto. Any modification or replacement that can be readily figured out by a person skilled in the art within the technical scope disclosed in the present invention should fall within the protection scope of the present invention. Therefore, the protection scope of the present invention should be subject to the protection scope of the claims.

## Claims

1. A task scheduling method, applied to an electronic device, wherein the method comprises:
receiving a first operation of a user;
starting a first application in response to the first operation;
performing, during running of the first application, a first GPU task created by the first application;
receiving a second operation of the user;
exiting from the first application to a home screen application in response to the second operation; and
in a process of exiting from the first application to the home screen application, suspending the first GPU task and performing a second GPU task created by the home screen application.

2. The method according to claim 1, wherein the second GPU task is a rendering task.

3. The method according to claim 1 or 2, wherein a priority of the first GPU task is a second priority, and the suspending the first GPU task and performing a second GPU task created by the home screen application comprises:
updating a priority of the second GPU task to a first priority, wherein the first priority is higher than the second priority; and
suspending the first GPU task and performing the second GPU task based on the priorities of the second GPU task and the first GPU task.

4. The method according to claim 2, wherein the electronic device is provided with a first queue and a second queue, the first queue corresponds to the first priority, and the second queue corresponds to the second priority; and
the updating a priority of the second GPU task to a first priority comprises: adding the second GPU task created by the home screen application to the first queue.

5. The method according to claim 3, wherein the first priority is adjacent to the second priority.

6. The method according to claim 3, wherein before the updating, the priority of the second GPU task is a third priority, and the third priority is equal to or lower than the second priority.

7. The method according to any one of claims 1 to 6, wherein after the performing a second GPU task created by the home screen application, the method further comprises: resuming the first GPU task.

8. The method according to claim 1, wherein the first application is a video editing application.

9. The method according to claim 8, wherein the first GPU task is an image processing task.

10. A task scheduling method, applied to an electronic device, wherein the method comprises:
running a home screen application;
performing, during the running of the home screen application, a first GPU task created by a first application;
receiving a third operation of a user;
exiting the home screen application and running a second application in response to the third operation; and
in a process of exiting the home screen application and running the second application, suspending the first GPU task and performing a second GPU task created by the home screen application, wherein the second application is the same as or different from the first application.

11. The method according to claim 10, wherein the second GPU task is a rendering task.

12. The method according to claim 10 or 11, wherein a priority of the first GPU task is a second priority, and the suspending the first GPU task and performing a second GPU task created by the home screen application comprises:
updating a priority of the second GPU task to a first priority, wherein the first priority is higher than the second priority; and
suspending the first GPU task and performing the second GPU task based on the priorities of the second GPU task and the first GPU task.

13. The method according to claim 11, wherein the electronic device is provided with a first queue and a second queue, the first queue corresponds to a first priority, and the second queue corresponds to a second priority; and
the updating a priority of the second GPU task to a first priority comprises: adding the second GPU task created by the home screen application to the first queue.

14. The method according to claim 12, wherein the first priority is adjacent to the second priority.

15. The method according to claim 12, wherein before the updating, the priority of the second GPU task is a third priority, and the third priority is equal to or lower than the second priority.

16. The method according to any one of claims 10 to 15, wherein after the performing a second GPU task created by the home screen application, the method further comprises: resuming the first GPU task.

17. The method according to claim 10, wherein the first application is a video editing application.

18. The method according to claim 17, wherein the first GPU task is an image processing task.

19. A task scheduling method, applied to an electronic device, wherein the method comprises:
displaying a third application in a first region of a screen of the electronic device, and displaying a fourth application in a second region of the screen, wherein the fourth application is different from the third application; and
in a process of displaying the third application in the first region and displaying the fourth application in the second region:
at a first moment, performing a third GPU task created by the third application; and
at a second moment, suspending the third GPU task and performing a fourth GPU task created by the fourth application, wherein the second moment is after the first moment.

20. The method according to claim 19, wherein the fourth GPU task is a rendering task.

21. The method according to claim 19 or 20, wherein a priority of the third GPU task is a second priority, and the suspending the third GPU task and performing a fourth GPU task created by the fourth application comprises:
updating a priority of the fourth GPU task to a first priority, wherein the first priority is higher than the second priority; and
suspending the third GPU task and performing the fourth GPU task based on the priorities of the fourth GPU task and the third GPU task.

22. The method according to claim 20, wherein the electronic device is provided with a first queue and a second queue, the first queue corresponds to a first priority, and the second queue corresponds to a second priority; and
the updating a priority of the fourth GPU task to a first priority comprises: adding the fourth GPU task created by the home screen application to the first queue.

23. The method according to claim 21, wherein the first priority is adjacent to the second priority.

24. The method according to claim 21, wherein before the updating, the priority of the fourth GPU task is a third priority, and the third priority is equal to or lower than the second priority.

25. The method according to any one of claims 19 to 24, wherein after the performing a fourth GPU task created by the home screen application, the method further comprises: resuming the third GPU task.

26. The method according to claim 19, wherein the third application is a home screen application.

27. The method according to claim 19, wherein the fourth application is a video playing application or a game application.

28. The method according to claim 19, wherein before the second moment, the method further comprises: receiving a fifth operation performed on the second region, and after the fifth operation, before the second moment, there is no other touch operation performed on the second region.

29. An electronic device, comprising one or more processors and one or more memories, wherein the one or more memories are coupled to the one or more processors, the one or more memories are configured to store a computer program, and when the one or more processors execute the computer program, the electronic device is enabled to perform the method according to any one of claims 1 to 9, or the method according to any one of claims 10 to 18, or the method according to any one of claims 19 to 28.

30. A chip system, wherein the chip system is applied to an electronic device, the chip system comprises one or more processors, and the processor is configured to invoke computer instructions to enable the electronic device to perform the method according to any one of claims 1 to 9, or the method according to any one of claims 10 to 18, or the method according to any one of claims 19 to 28.

31. A computer-readable storage medium, comprising a computer program, wherein when the computer program is run on an electronic device, the electronic device is enabled to perform the method according to any one of claims 1 to 9, or the method according to any one of claims 10 to 18, or the method according to any one of claims 19 to 28.
